# FASCICULE DE BREVET EUROPEEN

(11) **EP 2 454 081 B1**
(45) Date de publication et mention de la délivrance du brevet: **04.09.2013**
(21) Numéro de dépôt: 10734111.7
(22) Date de dépôt: 15.07.2010
(51) Int. Cl.: B29C 70/38, F28F 5/02

(54) **MACHINE D'APPLICATION DE FIBRES COMPRENANT UN ROULEAU DE COMPACTAGE SOUPLE AVEC SYSTEME DE REGULATION THERMIQUE**
MASCHINE ZUM AUFTRAGEN VON FASERN MIT EINER FLEXIBLEN KOMPAKTIERWALZE MIT EINEM WÄRMEREGELUNGSSYSTEM
MACHINE FOR APPLYING FIBERS, INCLUDING A FLEXIBLE COMPACTING ROLLER WITH A HEAT ADJUSTMENT SYSTEM

(30) Priorité: 17.07.2009 FR 0954963
(43) Date de publication de la demande: 23.05.2012
(73) Titulaire: Coriolis Composites, 69001 Lyon (FR)
(72) Inventeur: HAMLYN, Alexander, F-56270 Ploemeur (FR); HARDY, Ivan, 56100 Lorient (FR)
(86) Numéro de dépôt international: PCT/EP2010/060198
(87) Numéro de publication internationale: WO 2011/006956

(56) Documents cités:
- US-A- 3 662 821
- US-A- 6 026 883

## Description

La présente invention concerne une machine d'application de fibres pour la réalisation de pièces en matériaux composites et plus particulièrement une telle machine comprenant un système de chauffage des fibres et un rouleau de compactage résistant au chauffage.

Il est connu des machines d'application de fibres pour l'application sur une surface d'application d'un moule mâle ou femelle d'une bande large formée d'au moins une fibre plate, de type ruban, pré-imprégnée de résine, notamment des fibres de carbone pré-imprégnées d'une résine thermodurcissable ou thermoplastique, et en particulier des machines dites de placement de fibres pour l'application d'une bande large formée de plusieurs fibres pré-imprégnées de résine.

Ces machines de placement de fibres, telles que décrites dans le document brevet W02006/092514, comprennent classiquement une tête de placement de fibres et un système de déplacement de ladite tête d'application de fibres. Ladite tête de placement de fibres comprend classiquement un rouleau de compactage destiné à venir en contact contre le moule pour appliquer la bande de fibres pré-imprégnées, des moyens de guidage des fibres sous la forme d'une bande sur ledit rouleau de compactage, et un système de chauffage pour chauffer les fibres pré-imprégnées.

Le rouleau de compactage presse la bande de fibres contre la surface d'application du moule, ou contre la ou les bandes de fibres précédemment déposées, afin de faciliter l'adhésion des bandes déposées entre elles, ainsi que pour évacuer progressivement l'air emprisonné entre les bandes déposées.

Le système de chauffage assure un chauffage de la bande de fibres pré-imprégnées, et/ou du moule ou des bandes déjà appliquées en amont du rouleau de compactage, juste avant le compactage de la bande, afin d'au moins ramollir la résine et ainsi favoriser l'adhésion des bandes entre elles. Le système de chauffage de la bande assure généralement au moins un chauffage de la bande juste avant son compactage.

Pour garantir un compactage sensiblement uniforme sur toute la largeur de la bande, la tête de placement de fibres comprend avantageusement un rouleau de compactage apte à s'adapter à la surface d'application, et de préférence un rouleau de compactage en un matériau dit souple, qui est déformable élastiquement, généralement un élastomère.

Dans le cas de résines thermodurcissables, les fibres pré-imprégnées sont simplement chauffées pour les ramollir, classiquement à des températures de l'ordre de 40°C. A ces températures, un rouleau souple en matériau élastomère peut avantageusement être utilisé. Après application de plusieurs couches de bandes superposées, la pièce résultante est durcie, par polymérisation, sous vide par passage dans un four, généralement autoclave.

Dans le cas de résines thermoplastiques, les fibres pré-imprégnées doivent être chauffées à des températures plus élevées, au moins jusqu'à la température de fusion de la résine, soit de l'ordre de 200 °C pour des résines de type nylon, et jusqu'à environ 400°C pour des résines de type PEEK. Une opération de durcissement, dite de consolidation, de la pièce résultante est avantageusement réalisée par la suite par passage dans un four.

Le chauffage lors de l'application de la bande peut être réalisé par un système de chauffage de type laser pour obtenir un chauffage précis et concentré. En raison des températures de chauffage élevées, les têtes de placement de fibres sont équipées de rouleaux de compactage métalliques, résistants à la chaleur, qui peuvent en outre être refroidis par l'intérieur via un circuit d'eau.

Pour pouvoir s'adapter au profil de la surface d'application, il a été proposé des rouleaux de compactage métalliques segmentés, comprenant plusieurs segments de rouleaux indépendants montés côte à côte sur un même axe, chaque segment étant déplaçable radialement et de manière indépendante, et étant sollicité élastiquement contre la surface d'application. Ces rouleaux métalliques segmentés s'avèrent toutefois de structure et de mise en oeuvre complexes.

Des rouleaux souples formés à partir d'un élastomère dit haute température, incluant un stabilisant thermique, ont également été testés. Ces rouleaux se sont toutefois révélés insatisfaisant pour la mise en oeuvre de résines thermoplastiques.

Pour permettre l'utilisation d'un rouleau souple aux températures d'utilisation des résines thermoplastiques, il a été proposé, notamment dans le document brevet FR 2 878 779, une tête équipée de deux rouleaux de compactage avec un système de chauffage agissant entre les deux rouleaux et délivrant un rayonnement thermique sensiblement perpendiculaire à la bande, entre les deux rouleaux. Une telle tête à deux rouleaux présente un encombrement plus important qui empêche la dépose de fibres sur certains profils de surface d'application. Par ailleurs, le chauffage des bandes préalablement déposées pour leur adhésion par soudage à la nouvelle bande appliquée se fait uniquement par conduction thermique, ce qui constitue un facteur limitatif de la vitesse d'application des fibres.

Le document US6026883 décrit une machine d'application de fibres selon le préambule de la revendication 1.

Le but de la présente invention est de proposer une solution visant à pallier les inconvénients précités, qui permet notamment la mise en oeuvre d'une grande variété de résines, tant thermodurcissables que thermoplastiques, avec un compactage sensiblement uniforme de la bande appliquée, et qui soit simple de conception et de réalisation.

A cet effet, la présente invention propose une machine d'application de fibres pour la réalisation de pièces en matériaux composites comprenant
- un rouleau de compactage pour appliquer sur une surface d'application une bande formée d'au moins une fibre plate pré-imprégnée de résine, de préférence formée de plusieurs fibres plates pré-imprégnées de résine, ledit rouleau de compactage comprenant un tube central rigide par lequel ledit rouleau est monté rotatif sur une structure support de la machine, et un cylindre réalisé en un matériau souple ou flexible, déformable élastiquement, assemblé coaxialement sur ledit tube central, et
- un système de chauffage apte à émettre un rayonnement thermique en direction de la bande, juste avant son compactage par le rouleau de compactage,
caractérisée en ce que ledit tube central est muni de trous radiaux, ledit cylindre en matériau souple ayant des moyens de communication fluidique aptes à mettre en communication fluidique lesdits trous radiaux avec la surface externe dudit cylindre, ladite machine comprenant des moyens de régulation thermique aptes à injecter un fluide de régulation thermique, de préférence gazeux, dans le passage interne du tube central.

Selon l'invention, la machine comprend un rouleau de compactage souple régulé thermiquement par un système de régulation thermique par circulation d'un fluide de régulation thermique. Le système de régulation thermique comprend
- des trous ménagés dans la paroi tubulaire du tube central, traversant de part en part cette dernière, ledit tube central étant par exemple métallique et/ou de section cylindrique,
- des moyens de communication fluidique prévus au niveau du cylindre en matériau souple pour permettre la circulation d'un fluide de régulation thermique à travers le cylindre, des trous radiaux vers la surface externe du cylindre.
- et des moyens de régulation thermique aptes à injecter un fluide de régulation thermique, de préférence gazeux, avantageusement un gaz à température ambiante ou refroidi, en particulier de l'air, dans le passage interne du tube central par au moins l'une de ses extrémités, le fluide de régulation thermique passe par les trous radiaux, traverse le cylindre en matériau souple pour arriver jusqu'à sa surface externe.

Dans le cas d'un fluide de régulation thermique à température ambiante, par exemple comprise entre 15°C et 30°C, ou refroidi à une température inférieure à 15°C, cette circulation du fluide de régulation thermique dans le rouleau de compactage permet un refroidissement du rouleau de compactage en surface, ainsi que dans l'épaisseur du cylindre en matériau souple et autorise ainsi l'utilisation d'un rouleau de compactage souple stable utilisable pour l'application de fibres pré-imprégnées de résine, en particulier de résines thermoplastiques. La machine selon l'invention, qui comprend un rouleau de compactage simple de conception, offre la possibilité d'utiliser une grande variété de résines thermodurcissables ou thermoplastiques combinées à une grande variété de fibres, synthétiques ou naturelles, hybrides ou non, notamment des fibres couramment employées dans le domaine des composites, telles que les fibres de verre, les fibres de carbone, de quartz, et d'aramide.

Selon une particularité, lesdits moyens de communication fluidique sont aptes à mettre ladite surface externe du cylindre en communication fluidique avec les faces latérales du rouleau de compactage, pour ainsi évacuer le fluide de régulation thermique au moins latéralement vers l'extérieur lors de l'utilisation de la machine.

Selon un mode de réalisation, lesdits moyens de communication fluidique comprennent des canaux radiaux, chaque canal radial débouchant sur un trou radial du tube central et sur la surface externe du cylindre. Les trous radiaux sont répartis sur la paroi cylindrique du tube central. Le tube central présente par exemple plusieurs ensembles de trous décalés longitudinalement le long de l'axe du rouleau de compactage, chaque ensemble comprenant une pluralité de trous ménagés à espace angulaire régulier.

Selon un mode de réalisation, lesdits moyens de communication comprennent des rainures longitudinales débouchant sur les faces latérales du cylindre, lesdits canaux radiaux débouchant sur lesdites rainures longitudinales. Pour une meilleure répartition du flux de fluide de régulation thermique sur la surface externe, lesdits moyens de communication fluidique comprennent avantageusement des rainures circulaires sur lesquelles débouchent lesdits canaux radiaux.

Selon un mode de réalisation, les moyens de communication fluidique sont constitués par la nature poreuse du matériau constituant le cylindre, lesdits moyens de communication fluidique comprennent alors un cylindre réalisé en un matériau souple poreux, élastiquement déformable tel qu'une mousse alvéolaire thermoplastique et/ou élastomère à cellules ouvertes, ou un matériau en fibres non tissées, telles que des fibres synthétiques, des fibres de verre ou des fibres métalliques, de préférence une mousse élastomère à cellules ouvertes. Dans ce cas, l'évacuation du fluide de régulation thermique se fait par les faces latérales du cylindre.

Selon un mode de réalisation, lesdits moyens de communication fluidique comprennent une gaine recouvrant la surface externe du cylindre, ladite gaine étant formée d'un matériau poreux, permettant ainsi l'évacuation du fluide de régulation thermique par les faces latérales de ladite gaine. Ledit matériau poreux est par exemple formé d'une mousse thermoplastique et/ou élastomère à cellules ouvertes, ou d'un matériau en fibres non tissées. Le matériau poreux de la gaine est déformable élastiquement pour suivre la déformation du cylindre lors de l'application de fibres, mais présente une élasticité moins importante que celle du matériau souple, et éventuellement poreux, constituant le cylindre afin de garantir l'évacuation du fluide de régulation thermique.

Selon un mode de réalisation, ledit rouleau comprend une gaine écran recouvrant ledit cylindre et formant un écran au rayonnement thermique émis par le système de chauffage, ladite gaine écran étant par exemple formée d'un tissu de fibres de verre.

Cette gaine écran permet d'éviter un échauffement du rouleau de compactage sur toute son épaisseur dû au rayonnement thermique du système de chauffage dirigé vers le rouleau de compactage. Cet écran absorbe et/ou réfléchit le rayonnement thermique, le fluide de régulation thermique servant alors à refroidir cette gaine écran pour éviter un échauffement du cylindre par conduction.

Dans le cas de placement de fibres, la machine comprend classiquement des moyens de coupe permettant de couper individuellement les fibres en amont du rouleau de compactage et des moyens de ré-acheminement, disposés en amont des moyens de coupe, pour réacheminer chaque fibre venant d'être coupée vers le rouleau de compactage afin de pouvoir à tout moment stopper et reprendre l'application de la bande, ainsi que faire varier la largeur de bande appliquée. Lorsque la bande appliquée est de largeur réduite, par exemple uniquement de 10 fibres pour une tête de placement à 16 ou 32 fibres, le rouleau reçoit directement le rayonnement thermique, sans fibres intercalées entre la source thermique et le rouleau. La gaine écran permet d'éviter le fort échauffement dû à ce rayonnement thermique direct.

Selon un mode de réalisation, en remplacement de la gaine écran, ou en combinaison avec cette dernière, ledit cylindre est formé d'un matériau sensiblement transparent audit rayonnement thermique, tel que décrit dans la demande de brevet français déposée par la demanderesse, le même jour que la présente demande, ayant pour titre « Machine d'application de fibres avec rouleau de compactage transparent au rayonnement du système de chauffage ». Dans la présente, on entend par matériau « sensiblement transparent au rayonnement thermique », un matériau ayant une absorbance faible dans la ou les longueurs d'ondes dudit rayonnement thermique. Selon un mode de réalisation, ledit matériau souple est un élastomère. De préférence, ledit matériau souple est un silicone ou polysiloxane, ou un polyuréthane, de préférence un silicone. Selon une particularité, ledit système de chauffage émet un rayonnement infrarouge de longueur(s) d'onde comprise(s) entre 780nm et 1500 nm, ledit matériau déformable élastiquement ayant donc une faible absorbance au moins dans cette plage de longueurs d'onde comprise entre 780 nm et 1500 nm. De préférence, ledit système de chauffage émet un rayonnement infrarouge de longueur(s) d'onde comprise(s) entre 850 nm et 1100 nm.

Selon un mode de réalisation, ledit rouleau de compactage comprend une couche extérieure anti-adhérente recouvrant ledit cylindre en matériau souple, lorsque ledit rouleau comprend une gaine en un matériau poreux, et/ou une gaine écran, ces dernières sont intercalées entre ledit cylindre et ladite couche extérieure anti-adhérente, ladite couche anti-adhérente est avantageusement formée d'un film antiadhérent, tel qu'un film PTFE (Polytetrafluoroéthylène), classiquement appelé film téflon, qui est par exemple thermo-rétracté sur le cylindre. Dans ce cas, le fluide de régulation thermique vient également réguler en température ladite couche extérieure anti-adhérente.

Selon un mode de réalisation, ledit système de chauffage est un système de type laser, notamment des diodes laser, un laser YAG ou un laser à fibre. En variante, le système de chauffage peut comprendre une ou plusieurs lampes infrarouge.

Selon un mode de réalisation, ladite machine comprend en outre des moyens de régulation thermique aptes à délivrer un flux de fluide de régulation thermique, en particulier d'air, en direction du rouleau de compactage, afin de réguler en température, en particulier refroidir, ledit rouleau de compactage par l'extérieur. Dans ce cas, la régulation thermique du rouleau se fait par l'intérieur du rouleau et par l'extérieur du rouleau de compactage, de préférence avec un même fluide de régulation thermique, de préférence de l'air.

Selon un mode de réalisation, lesdits moyens de régulation sont aptes à injecter un fluide de régulation thermique à température ambiante, de préférence comprise entre 15°C et 30°C, ou un fluide de régulation thermique refroidi à une température inférieure à 15°C, de préférence un gaz à température ambiante ou refroidi, de préférence de l'air à température ambiante, afin de refroidir le rouleau de compactage.

La présente invention a également pour objet un rouleau de compactage tel que décrit précédemment, pour machine d'application de fibres, comprenant un tube central rigide et un cylindre réalisé en un matériau souple ou flexible, déformable élastiquement, assemblé sur ledit tube central, et caractérisé notamment en ce que ledit tube central est muni de trous radiaux, ledit cylindre en matériau souple ayant des moyens de communication fluidique aptes à mettre en communication fluidique lesdits trous avec la surface externe dudit cylindre.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1 est une vue schématique de côté d'une tête d'application de fibres selon un premier mode de réalisation de l'invention, comprenant un rouleau de compactage et un système de chauffage ;
- la figure 2 est une vue en perspective du rouleau de compactage de la machine de la figure 1 ;
- les figures 3A et 3B sont des vues de côté transversale et longitudinale, avec des arrachés partiels, du rouleau de compactage de la figure 2 ;
- la figure 4 est une vue en perspective d'un rouleau de compactage d'une machine selon un deuxième mode de réalisation ;
- les figures 5A et 5B sont des vues de côté transversale et longitudinale, avec des arrachés partiels, du rouleau de compactage de la figure 4 ;
- la figure 6 est une vue en perspective d'un rouleau de compactage d'une machine selon un troisième mode de réalisation ;
- la figure 7 est une vue longitudinale de côté du rouleau de compactage de la figure 6 avec un arraché partiel ;
- la figure 8 est une vue en perspective d'un rouleau de compactage d'une machine selon un quatrième mode de réalisation ; et,
- la figure 9 est une vue longitudinale de côté, avec arraché partiel, du rouleau de compactage de la figure 8.

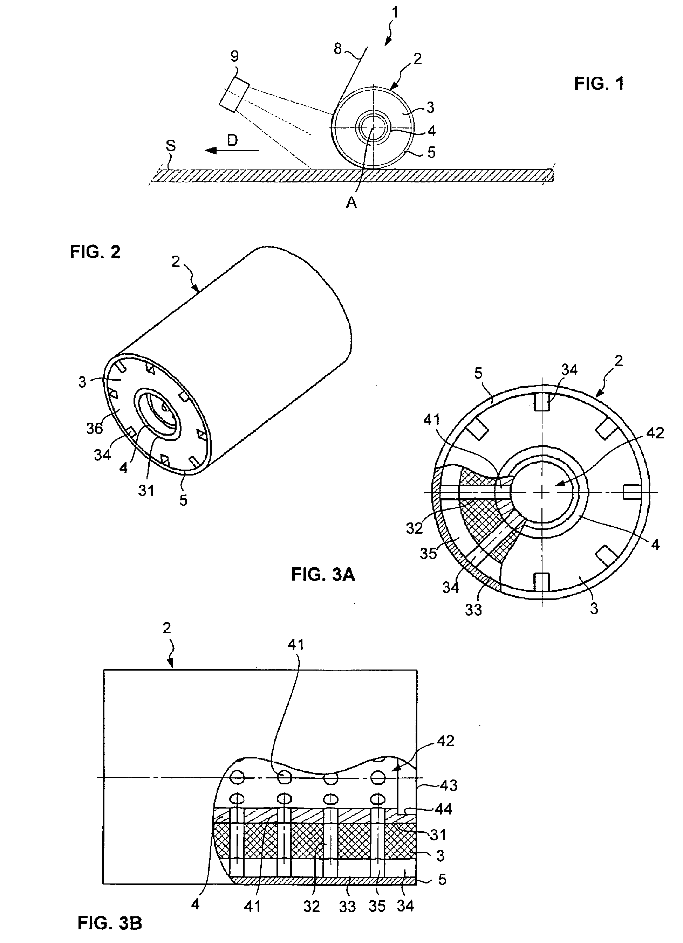

En référence à la figure 1, la machine d'application comprend une tête d'application 1 pour l'application d'une bande 8 de fibres pré-imprégnées de résine, ladite tête comportant un rouleau de compactage 2 qui est monté rotatif autour d'un axe A sur une structure support (non représentée) de la tête, la tête étant montée par ladite structure support à l'extrémité d'un système de déplacement, par exemple un poignet de robot.

La tête comprend en outre un système de chauffage 9 monté également sur la structure support, en amont du rouleau par rapport à la direction d'avancement D de la tête d'application lors de l'application de la bande 8 de fibres sur une surface d'application S. Le dispositif de chauffage est par exemple un système de chauffage de type laser, dont le rayonnement est dirigé en direction de la bande, juste avant son compactage, ainsi que vers la ou les bandes déjà déposées. Tel qu'illustré à la figure 1, le rayonnement est ainsi dirigé obliquement vers le rouleau pour chauffer une section de bande disposée sur le rouleau, avant son compactage par ce dernier.

Dans le cas d'une machine de placement de fibres, la tête comprend des moyens de guidage qui guident les fibres entrant dans la tête vers le rouleau de compactage 2 sous la forme d'une bande de fibres pré-imprégnées de résine, les fibres de la bande étant disposées côte à côte de manière sensiblement jointives. Par déplacement de la tête par le robot, le rouleau de compactage est amené en contact avec la surface d'application d'un moule S pour appliquer la bande.

En référence aux figures 2, 3A et 3B, le rouleau de compactage selon l'invention comprend un corps cylindrique ou cylindre 3 en un matériau souple, élastiquement déformable par compression. Le cylindre présente un passage central 31 cylindrique pour son assemblage sur un noyau support formé d'un tube central 4 rigide cylindrique, par exemple métallique, tel qu'en aluminium. Le cylindre 3 et le tube central 4 sont coaxiaux et sont solidaires en rotation l'un de l'autre. Le cylindre est par exemple constitué d'un élastomère non expansé, tel qu'un silicone ou polysiloxane, ou un polyuréthane.

Le cylindre en matériau souple permet au rouleau de compactage de s'adapter aux variations de courbure de la surface d'application et ainsi d'appliquer une pression sensiblement uniforme sur l'ensemble de la bande déposée. Le tube rigide permet le montage rotatif du rouleau sur la structure support.

Le tube central est muni de trous radiaux 41, par exemple cylindrique, traversant la paroi cylindrique du tube central de part en part. Les trous radiaux débouchent ainsi sur le passage interne 42 du tube central et sur le cylindre. Ce dernier est muni de canaux radiaux 32, alignés avec lesdits trous radiaux, et présentant des diamètres sensiblement identiques à ceux desdits trous radiaux. Dans l'exemple illustré, le tube central comprend six ensembles de trous radiaux 41 décalé longitudinalement le long de l'axe A du rouleau, chaque ensemble comprend plusieurs trous radiaux disposés à espace angulaire régulier, par exemple huit trous radiaux à 45° les uns des autres. Le cylindre comprend alors six ensembles de canaux radiaux 32 comprenant chacun huit canaux radiaux à 45° les uns des autres.

Chaque canal radial 32 débouche sur la surface externe 33 cylindrique du cylindre 3, au niveau du croisement d'une rainure longitudinale 34 et d'une rainure circulaire 35. Les rainures longitudinales 34, au nombre de huit dans le présent exemple, s'étendent sur toute la longueur du cylindre d'une face latérale 36 à l'autre du cylindre.

Le cylindre est revêtu extérieurement d'une couche extérieure anti-adhérente 5, formée ici d'un film téflon thermo-rétracté sur la surface extérieure du cylindre. Le film téflon recouvre ainsi les rainures longitudinales et les rainures circulaires ménagées sur la surface externe du cylindre. Le film téflon par lequel le rouleau est en contact avec la bande, limite l'adhérence du rouleau aux fibres ainsi que l'encrassement du rouleau.

Le rouleau de compactage est monté par les extrémités ouvertes 43 de son tube central par exemple entre deux flasques de la structure support de la tête. La machine comprend des moyens de régulation thermique (non représentés), permettant d'injecter un gaz à température ambiante, comprise entre 15 et 30°C, ou un gaz refroidi à une température inférieure à 15°C, en particulier de l'air, par l'une des extrémités ouvertes 43 du tube central. Cet injection d'air est réalisée au moyen d'un système à joint tournant, connu en soi. Le passage du tube central présente avantageusement un lamage 44 pour le montage du système à joint tournant. En fonctionnement, l'air injecté par au moins l'une des extrémités ouvertes 43 du tube central, passe dans les trous radiaux 41 puis les canaux radiaux 32 du cylindre pour se répartir dans les rainures circulaires 35 et longitudinales 34, et s'échapper par les faces latérales 36 du cylindre sur lesquelles débouchent les rainures longitudinales. Avantageusement, le fluide de régulation thermique est de l'air à température ambiante ou refroidi, de préférence de l'air à température ambiante, pour refroidir le rouleau de compactage et maintenir celui-ci par exemple à une température de l'ordre de 30°C.

En variante, le cylindre peut en outre être formé d'un matériau souple sensiblement transparent au rayonnement émis par le système de chauffage.

A titre d'exemple, le matériau souple sensiblement transparent au rayonnement thermique est un élastomère de type silicone, en particulier l'élastomère silicone vendu sous la dénomination commerciale Silastic T-4 par la société Dow Corning.

Le système de chauffage de type laser peut comprendre des diodes laser, disposées en une ou plusieurs rangées, émettant un rayonnement de longueur(s) d'onde comprise(s) entre 880 à 1030 nm par exemple, un laser à fibre optique ou un laser YAG, émettant à une longueur d'onde de l'ordre de 1060 nm.

Afin de compléter la régulation thermique du rouleau par l'intérieur, le système de régulation thermique peut comprendre en outre des moyens de régulation thermique aptes à délivrer un flux d'air, en direction du rouleau de compactage, afin de refroidir ledit rouleau de compactage également par l'extérieur.

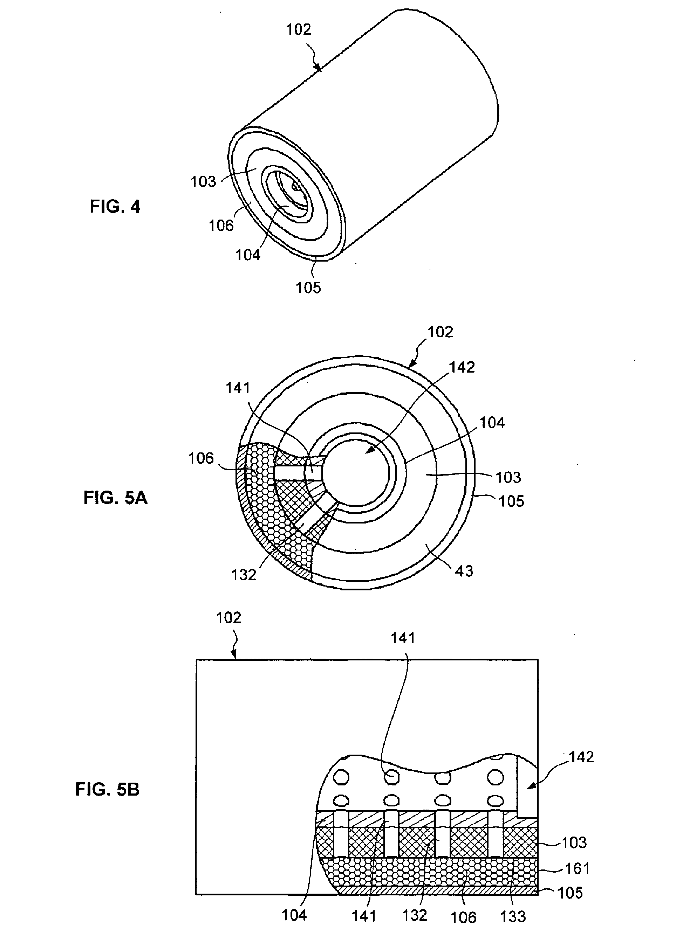

Les figures 4, 5A et 5B illustrent un deuxième mode de réalisation de l'invention dans lequel le rouleau de compactage 102 comprend comme précédemment un tube central rigide 104 muni de trous radiaux 141, un cylindre 103 en matériau souple élastiquement déformable muni de canaux radiaux 132. Dans cet exemple, les rainures longitudinales circulaires décrites précédemment, pour améliorer la répartition du flux d'air injecté sur la surface du cylindre et son échappement par les faces latérales du cylindre, sont remplacées par une gaine 106 recouvrant la surface externe 133 du cylindre, ladite gaine étant formée d'un matériau poreux, tel qu'une mousse thermoplastique et/ou élastomère à cellules ouvertes, ou un matériau en fibres non tissées. Ce matériau poreux présente une certaine élasticité pour suivre les déformations du cylindre lors de la mise en appui du rouleau contre la surface d'application. Une gaine extérieure anti adhérente 105 recouvre ladite gaine en matériau poreux. Après passage dans le passage interne 142 et les trous radiaux 141 du tube central 104, puis dans les canaux radiaux 132 du cylindre, l'air injecté passe à travers la gaine en matériau poreux et s'échappe latéralement par les faces latérales 161 de ladite gaine.

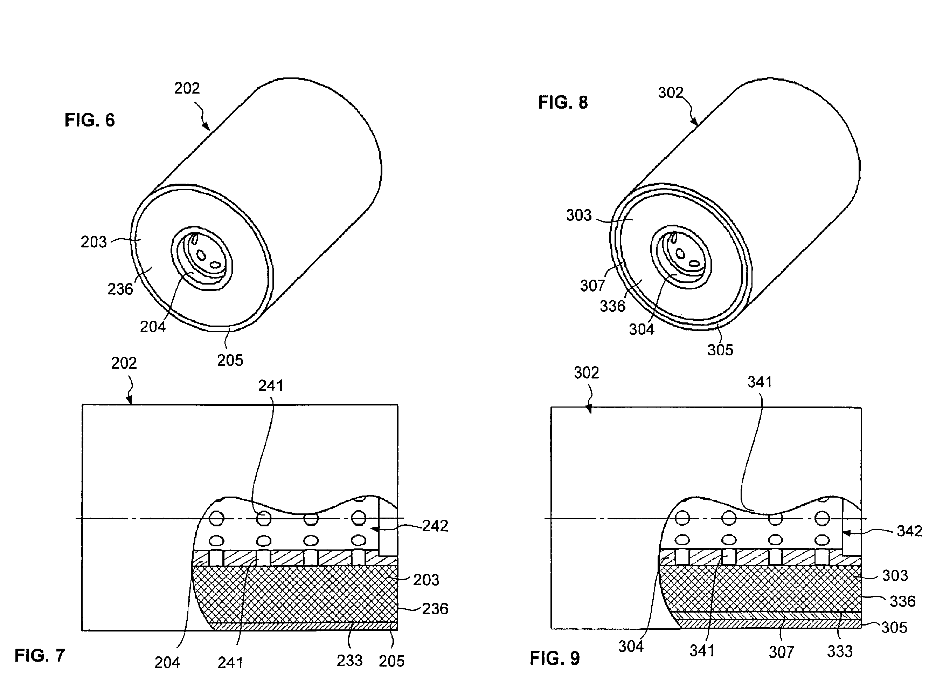

Les figures 6 et 7 illustrent un troisième mode de réalisation de l'invention dans lequel le rouleau de compactage 202 comprend comme dans le premier mode de réalisation, un tube central rigide 204 muni de trous radiaux 241, un cylindre 203 en matériau souple élastiquement déformable et une gaine extérieure anti-adhérente 205 recouvrant la surface externe 233 du cylindre. Dans ce mode de réalisation, le cylindre ne comprend pas de canaux radiaux, mais est constitué d'un matériau souple élastiquement déformable, et poreux. L'air injecté, qui sort du passage interne 242 du tube central 204 par les trous radiaux 241, traverse l'ensemble du cylindre poreux et s'échappe par les faces latérales 236 du cylindre. Le matériau souple poreux est une mousse thermoplastique et/ou élastomère à cellules ouvertes, ou un matériau en fibres non tissées, par exemple une mousse élastomère à cellules ouvertes.

Les figures 8 et 9 illustrent un quatrième mode de réalisation de l'invention dans lequel le rouleau de compactage 302 comprend comme dans le troisième mode de réalisation, un tube central rigide 304 muni de trous radiaux 341, un cylindre 303 en matériau souple poreux élastiquement déformable, et une gaine extérieure anti-adhérente 305 recouvrant ledit cylindre. Le rouleau de compactage comprend en outre une gaine écran 307 intercalée entre la surface externe 333 du cylindre et la gaine extérieure anti-adhérente. Cette gaine écran absorbe et/ou réfléchit le rayonnement thermique émis par le système de chauffage 9 de sorte que le cylindre en matériau souple ne soit pas atteint par ledit rayonnement. L'air injecté, sortant du passage interne 342 du tube central 304 par les trous radiaux 341, traverse l'ensemble du cylindre pour refroidir la bande écran et s'échappe par les faces latérales 336 du cylindre.

Dans le mode de réalisation décrit, le système de régulation thermique est utilisé pour refroidir le rouleau de compactage souple. Bien entendu, le système de régulation thermique peut être utilisé pour chauffer le rouleau de compactage souple.

## Revendications

1. Machine d'application de fibres pour la réalisation de pièces en matériaux composites comprenant un rouleau de compactage (2, 102, 202, 302) pour appliquer sur une surface d'application (S) une bande (8) formée d'au moins une fibre plate pré-imprégnée de résine, et un système de chauffage (9) apte à émettre un rayonnement thermique en direction de la bande, ledit rouleau de compactage comprenant un tube central (4, 104, 204, 304) rigide, et un cylindre (3, 103, 203, 303) réalisé en un matériau souple, déformable élastiquement, assemblé sur ledit tube central,
**caractérisée en ce que** ledit tube central (4, 104, 204, 304) est muni de trous radiaux (41, 141, 241, 341), ledit cylindre (3, 103, 203, 303) en matériau souple ayant des moyens de communication fluidique (32, 34, 35 ; 132, 106 ; 203 ; 303) aptes à mettre en communication fluidique lesdits trous radiaux avec la surface externe (33, 133, 233, 333) dudit cylindre, ladite machine comprenant des moyens de régulation thermique aptes à injecter un fluide de régulation thermique dans le passage interne (42, 142, 242, 342) du tube central.

2. Machine d'application de fibres selon la revendication 1, **caractérisée en ce que** lesdits moyens de communication fluidique (34, 35 ; 106 ; 203 ; 303) sont aptes à mettre ladite surface externe (33, 133, 233, 333) du cylindre en communication fluidique avec les faces latérales (36, 161, 236, 336) du rouleau de compactage.

3. Machine d'application de fibres selon la revendication 1 ou 2, **caractérisée en ce que** lesdits moyens de communication fluidique comprennent des canaux radiaux (32 ; 132), chaque canal radial débouchant sur un trou radial (41, 141, 241, 341) du tube central (4, 104, 204, 304) et sur la surface externe (33,133, 233, 333) du cylindre.

4. Machine d'application de fibres selon les revendications 2 et 3, **caractérisée en ce que** lesdits moyens de communication comprennent des rainures longitudinales (34) débouchant sur les faces latérales (36) du cylindre, lesdits canaux radiaux (32, 132) débouchant sur lesdites rainures longitudinales.

5. Machine d'application de fibres selon la revendication 3 ou 4, **caractérisée en ce que** lesdits moyens de communication fluidique comprennent des rainures circulaires (35) sur lesquelles débouchent lesdits canaux radiaux (32).

6. Machine d'application de fibres selon l'une des revendications 1 à 5, **caractérisée en ce que** lesdits moyens de communication fluidique comprennent un cylindre (203, 303) réalisé en un matériau souple poreux.

7. Machine d'application de fibres selon l'une des revendications 1 à 6, **caractérisée en ce que** lesdits moyens de communication fluidique comprennent une gaine (106) recouvrant la surface externe du cylindre, ladite gaine étant formée d'un matériau poreux.

8. Machine d'application de fibres selon l'une des revendications 1 à 7, **caractérisée en ce que** ledit rouleau comprend une gaine écran (307) recouvrant ledit cylindre et formant un écran au rayonnement thermique émis par le système de chauffage (9).

9. Machine d'application de fibres selon l'une des revendications 1 à 8, **caractérisée en ce que** ledit cylindre (3) est formé d'un matériau sensiblement transparent audit rayonnement thermique.

10. Machine d'application de fibres selon l'une des revendications 1 à 9, **caractérisée en ce que** ledit rouleau de compactage (2, 102, 202, 302) comprend une couche extérieure anti-adhérente (5, 105, 205, 305) recouvrant ledit cylindre (3, 103, 203, 303) en matériau souple.

11. Machine d'application de fibres selon l'une des revendications 1 à 10, **caractérisée en ce qu'**elle comprend en outre des moyens de régulation thermique aptes à délivrer un flux de fluide de régulation thermique en direction du rouleau de compactage, afin de réguler en température ledit rouleau de compactage par l'extérieur.

12. Machine d'application de fibres selon l'une des revendications 1 à 11, **caractérisée en ce que** lesdits moyens de régulation thermique sont aptes à injecter un fluide de régulation thermique constitué d'air à température ambiante comprise entre 15°C et 30°C.

## Patentansprüche

1. Faserlegevorrichtung für die Fertigung von Faser(verbund)-Strukturen, welche beinhaltet eine Andruckrolle (2,102,202,302), um eine Anzahl an Fasern (8), bestehend aus mindestens einer mit Harz vorimprägnierten Faser und ein Erwärmungssystem (9), geeignet, um jene Fasern zu erwärmen, die Andruckrolle beinhaltet eine steife innere Achse in Form einer Röhre und eine äußere Einheit, bestehend aus einem elastischen, weichen Material
**dadurch gekennzeichnet, dass** die steife innere Röhre Durchbrüche (41, 141, 241, 341) besitzt, welche so angeordnet sind, dass die äußere weiche Einheit (33, 133, 233, 333) über diese Durchbrüche (32, 34, 35 ; 132, 106 ; 203 ; 303) mit der inneren Röhre (3, 103, 203, 303), so verbunden ist, dass ein Fluid zwischen der inneren Röhre und dem weichen Mantel zirkulieren kann, die beschriebene Vorrichtung beinhaltet ferner eine Temperiereinheit, die ein Thermofluid in die innere Röhre (42, 142, 242, 342) einbringen kann.

2. Faserlegevorrichtung, nach Anspruch 1 **dadurch gekennzeichnet, dass** über die beschriebenen Durchbrüche (34, 35 ; 106 ; 203 ; 303) ein thermischer Austausch zwischen der Außenfläche (33, 133, 233, 333) auch mit den Stirnflächen (36, 161, 236, 336) möglich ist.

3. Faserlegevorrichtung, nach Anspruch 1 oder 2 **dadurch gekennzeichnet, dass** die beschriebene Temperiervorrichtung radiale Kanäle (32 ; 132) aufweist, diese radialen Kanäle münden in radiale Durchbrüche (41, 141, 241, 341) in der steifen inneren Röhre 4, 104, 204, 304) und der weichen äußeren Hülle (33,133, 233, 333).

4. Faserlegevorrichtung, nach Anspruch 2 und 3 **dadurch gekennzeichnet, dass** die beschriebene Temperiervorrichtung in Längsrichtung Kanäle (34) aufweist, diese Kanäle münden in die Stirnflächen (36), die radialen Kanäle (32, 132) münden in die in Längsrichtung ausgerichteten Kanäle.

5. Faserlegevorrichtung nach den Ansprüchen 3 oder 4 **dadurch gekennzeichnet, dass** sie über in Umfangsrichtung verlaufende Kanäle (35) verfügt, in welche die radial verlaufenden Kanäle (32) münden.

6. Faserlegevorrichtung nach einer der Ansprüche 1 bis 5 **dadurch gekennzeichnet, dass** der Zylinder (203,303) aus einem weichen porösen Material besteht.

7. Faserlegevorrichtung nach einer der Ansprüche 1 bis 6, **dadurch gekennzeichnet, dass** die äußere Hülle (106) aus einem porösen Material besteht.

8. Faserlegevorrichtung nach einer der Ansprüche 1 bis 7, **dadurch gekennzeichnet** die beschriebene Andruckrolle mit einer Schutzschicht (307)versehen ist, die die thermische Energie des Erwärmungssystems (9) abschirmt.

9. Faserlegevorrichtung nach einer der Ansprüche 1 bis 8, **dadurch gekennzeichnet, dass** der beschriebene Zylinder (3) transparent für eine thermische Strahlung ist.

10. Faserlegevorrichtung nach einer der Ansprüche 1 bis 9, **dadurch gekennzeichnet, dass** die beschriebene Andruckrolle (2, 102, 202, 302) eine äußere Antihaft-Beschichtung hat (5, 105, 205, 305), welche auf der weichen Hülle (3, 103, 203, 303) aufgebracht ist.

11. Faserlegevorrichtung nach einer der Ansprüche 1 bis 10, **dadurch gekennzeichnet, dass** die beschriebene Vorrichtung eine Temperaturregelung beinhaltet, die die Temperatur des Thermofluids steuert.

12. Faserlegevorrichtung nach einer der Ansprüche 1 bis 11, **dadurch gekennzeichnet, dass** die beschriebene Vorrichtung eine Temperaturregelung beinhaltet, die mit Luft im Temperaturbereich zwischen 15°C und 30°C arbeitet.

## Claims

1. Fiber application machine for the production of composite material parts comprising a compacting roller (2, 102, 202, 302) for applying to an application surface (S), a strip (8) formed of at least one flat fiber pre-impregnated with resin, and a heating system (9) capable of emitting a thermal radiation towards the strip, said compaction roller comprising a rigid central tube (4, 104, 204, 304), and a cylinder (3, 103, 203, 303) made of an elastically deformable, flexible material, assembled on said central tube,
**characterized in that** said central tube (4, 104, 204, 304) is provided with radial holes (41, 141, 241, 341), said cylinder (3, 103, 203, 303) of flexible material having communication means fluid (32, 34, 35, 132, 106, 203, 303) adapted to put in fluid communication said radial holes with the outer surface (33, 133, 233, 333) of said cylinder, said machine comprising thermal regulation means capable of injecting a thermal regulation fluid in the internal passage (42, 142, 242, 342) of the central tube.

2. Fiber application machine according to claim 1, **characterized in that** said fluid communication means (34, 35, 106, 203, 303) are adapted to put said outer surface (33, 133, 233, 333) of the cylinder in fluid communication with the lateral faces (36, 161, 236, 336) of the compaction roller.

3. Fiber application machine according to claim 1 or 2, **characterized in that** said fluid communication means comprise radial channels (32, 132), each radial channel opening into a radial hole (41, 141, 241, 341) of the central tube (4, 104, 204, 304) and on the outer surface (33,133, 233, 333) of the cylinder.

4. Fiber application machine according to claims 2 and 3, **characterized in that** said communication means comprise longitudinal grooves (34) opening into the side faces (36) of the cylinder, said radial channels (32, 132) opening into said longitudinal grooves.

5. Fiber application machine according to claim 3 or 4, **characterized in that** said fluid communication means comprise circular grooves (35) into which open said radial channels (32).

6. Fiber application machine according to one of claims 1 to 5, **characterized in that** said fluid communication means comprises a cylinder (203, 303) made of a porous flexible material.

7. Fiber application machine according to one of claims 1 to 6, **characterized in that** said fluid communication means comprise a sheath (106) covering the outer surface of the cylinder, said sheath being formed of a porous material.

8. Fiber application machine according to one of claims 1 to 7, **characterized in that** said roller comprises a barrier sheath (307) covering said cylinder and forming a barrier to the thermal radiation emitted by the heating system (9).

9. Fiber application machine according to one of claims 1 to 8, **characterized in that** said cylinder (3) is formed of a material substantially transparent to said thermal radiation.

10. Fiber application machine according to one of claims 1 to 9, **characterized in that** said compaction roller (2, 102, 202, 302) comprises an outer anti-adhesive layer (5, 105, 205, 305) covering said cylinder (3, 103, 203, 303) of flexible material.

11. Fiber application machine according to one of claims 1 to 10, **characterized in that** it further comprises thermal regulation means adapted to deliver a flow of thermal regulation fluid towards the compaction roller, for regulating in temperature said compaction roller from the outside.

12. Fiber application machine according to one of claims 1 to 11, **characterized in that** said thermal regulation means are adapted to inject a thermal regulation fluid consisting of air at room temperature between 15°C and 30°C.
